# EUROPÄISCHE PATENTANMELDUNG

(11) **EP 2 107 344 A2**
(43) Veröffentlichungstag der Anmeldung: **07.10.2009**
(21) Anmeldenummer: 09100214.7
(22) Anmeldetag: 31.03.2009
(51) Int. Cl.: G01D 5/347

(54) **Drehsteller**

(30) Priorität: 03.04.2008 DE 102008017069
(71) Anmelder: Continental Automotive GmbH, 30165 Hannover (DE)
(72) Erfinder: Heimberger, Hans-Dieter, 61440 Oberursel (DE); Santarossa, Bruno, 63694 Limeshain (DE); Reuter, Siegfried, 35510 Butzbach (DE); Werner, Josef, 61389 Schmitten/Dorfweil (DE)

(57) **Zusammenfassung**

Die Erfindung bezieht sich auf einen Drehsteller mit Drehpositionserkennung, insbesondere für den Einsatz in einem Kraftfahrzeug, mit einer um eine Drehachse drehbaren Handhabe 2 sowie einer Positionssensorik zur Erfassung der Drehposition der Handhabe 2. Von der Handhabe 2 ist ein ringartiges Kodierelement in Drehschritten um eine Drehachse drehbar, das entlang seines radial umlaufenden Umfangs mehrere Ringbereiche 6, 7, 8 aufweist und jeder Ringbereich 6, 7, 8 sich über dieselbe Anzahl an Drehschritten erstreckt. Jedem Drehschritt ist ein Kodierbereich 6', 7', 8' zugeordnet, wobei die Kodierbereiche 6', 7', 8' jeweils eine bestimmte Transparenz aufweisen. Mehrere Lichtquellen 9, 10,11 sind um den Umfang des Kodierelements verteilt fest angeordnet, die mit jeweils fest angeordnete Lichtempfänger zum Empfang des von den Lichtquellen 9, 10, 11 durch die transparenten Kodierbereiche 6', 7', 8' hindurchtretenden Lichts zugeordnet sind, wobei zu jeder Drehschrittposition 22 die von jedem Lichtempfänger empfangene Lichtintensität separat erfassbar und ein entsprechendes Lichtintensitätssignal einer Elektronik zuführbar ist, in der ein Signalmuster 21 der empfangenen Lichtintensitätssignale der Lichtempfänger gebildet und mit in einem Speicher abgelegten Signalmuster 21 vergleichbar ist, wobei jedes abgelegte Signalmuster 21 eine Drehposition der Handhabe 2 entspricht und wobei bei Weiterdrehung um einen Drehschritt von einem einzigen Lichtempfänger eine Lichtintensitätsänderung sowie von den Lichtempfängern keine Lichtintensitätsänderung erfassbar ist.

## Beschreibung

Die Erfindung bezieht sich auf einen Drehsteller mit Drehpositionserkennung, insbesondere für den Einsatz in einem Kraftfahrzeug, mit einer um eine Drehachse drehbaren Handhabe sowie einer Positionssensorik zur Erfassung der Drehposition der Handhabe.

Bei derartigen Drehstellern ist es zur absoluten Drehpositionserkennung bekannt als Positionssensorik einen Potentiometer zu verwenden.

Da Potentiometer einem Verschleiß durch Reibung eines Schleifers auf einer Schleiferbahn unterliegen, sind sie defektanfällig.

Aufgabe der Erfindung ist es daher einen Drehsteller der eingangs genannten Art zu schaffen, der eine geringe Defektanfälligkeit aufweist.

Diese Aufgabe wird erfindungsgemäß dadurch gelöst, dass von der Handhabe ein ringartiges Kodierelement in Drehschritten um eine Drehachse drehbar ist, das entlang seines radial umlaufenden Umfangs mehrere Ringbereiche aufweist und jeder Ringbereich sich über dieselbe Anzahl an Drehschritten erstreckt, mit jeweils einem Drehschritt zugeordneten Kodierbereich, wobei die Kodierbereiche jeweils eine bestimmte Transparenz oder Reflexionsfläche aufweisen, mit mehreren um den Umfang des Kodierelements verteilt fest angeordneten Lichtquellen, denen jeweils fest angeordnete Lichtempfänger zum Empfang des von den Lichtquellen durch die transparenten Kodierbereiche hindurchtretenden Lichts oder des an den Kodierbereichen reflektierten Lichts zugeordnet sind, wobei zu jeder Drehschrittposition die von jedem Lichtempfänger empfangene Lichtintensität separat erfaßbar und ein entsprechendes Lichtintensitätssignal einer Elektronik zuführbar ist, in der ein Signalmuster der empfangenen Lichtintensitätssignale der Lichtempfänger gebildet und mit in einem Speicher abgelegten Signalmustern vergleichbar ist, wobei jedes abgelegte Signalmuster einer Drehposition der Handhabe entspricht, und wobei pro Weiterdrehung um einen Drehschritt von einem einzigen Lichtempfänger eine Lichtintensitätsänderung sowie von den weiteren Lichtempfängern keine Lichtintensitätsänderung erfassbar ist.

Dabei ist die absolute Drehpositionserkennung sowie Drehrichtungsdetektion berührungslos und damit verschleißfrei.

Die Kodierung mittels Mehrlevelkodierung sowie der Einsatz von redundanten Kodes ermöglicht eine sichere Positionserkennung mit geringem Aufwand.

Es versteht sich, dass anstatt der optischen Kodierung auch eine Kodierung auf induktiver, kapazitiver oder magnetischer Basis gleicher Funktionalität verwendet werden kann.

Zur Umwandlung der Lichtsignale in elektrische Signale kann das von den Lichtempfängern empfangene Licht Photosensoren zur Bildung der Lichtintensitätssignale zuleitbar sein.

Bauteilsparend und montagefreundlich ist es dabei, wenn das von mehreren Lichtempfängern empfangene Licht einem einzigen Photosensor zuleitbar ist.

Zu einer kostengünstigen Ausbildung führt es, wenn das von allen Lichtempfängern erfasste Licht einem einzigen Photosensor zuleitbar ist, wobei die den Lichtempfängern zugeordneten Lichtquellen in einem Multiplexverfahren ansteuerbar sind, da so nur ein einziger teurer Photosensor erforderlich ist.

Das Multiplexverfahren dient dabei einem nacheinander Einschalten der Lichtquellen in der richtigen Reihenfolge und dem richtigen Zeitrhythmus.

Sind die Lichtempfänger Lichteinkoppelstellen von Lichtleitern, von denen das erfasste Licht dem oder den Photosensoren zuleitbar ist, so können die Photosensoren an einer beliebigen Stelle angeordnet werden, wodurch der Aufbau des Drehstellers vereinfacht werden kann.

Eine weitere Bauteilreduzierung und Montagevereinfachung wird erreicht, dass die Lichtleiter mehrerer Lichtempfänger, die zu einem einzigen Photosensor führen, einteilig ausgebildet sind.

Die Anzahl der Drehschritte pro Ringbereich des Kodierelements kann der Anzahl von Lichtempfängern entsprechen.

Um die Kodierbereiche zur Erfassung sicher in ihre Drehposition einzustellen, sind vorzugsweise die Drehschritte durch Rastpositionen der Handhabe definiert.

Erfolgt bei Weiterdrehung des Kodierelements um einen Drehschritt eine Erfassung der Lichtintensität von einem Kodierbereich zu einem benachbarten Kodierbereich übergangslos, so ergeben sich keine Fehlinterpretationen durch Zwischenlichtintensitäten in den Zwischenpositionen zwischen den Drehschritten. Dazu können Änderungen der Lichtintensität von einer Schrittposition zur benachbarten Schrittposition von 0 % auf 50 % der alten Schrittposition und von 50 % auf 100 % der neuen Schrittposition zugeordnet werden.

In einer einfachen Ausbildung kann das Kodierelement ein Kodierring sein, dessen Kodierbereiche unterschiedlicher Transparenz eine entsprechende unterschiedliche Wanddicke aufweisen.

Sind axial neben dem ringartigen Kodierelement ein oder mehrere weitere ringartige Kodierelemente angeordnet, wobei jedes der Kodierelemente in die Ebene der Lichtquellen und Lichtempfänger bewegbar ist und wobei jedem der Kodierelemente zugeordnet Signalmuster in dem Speicher abgelegt sind, so können unterschiedliche Menüs den verschiedenen Ebenen zugeordnet werden.

Bauteil- und montageaufwandsparend sind dabei vorzugsweise die mehreren ringartigen Kodierelemente zu einem Kodierringblock fest miteinander verbunden sind, der axial verschiebbar einstellbar ist.

Durch eines der ringartigen Kodierelemente kann ein Signalmuster eines Steuersignals erzeugbar sein, wobei von der Elektronik ein elektrisches oder elektronisches Gerät mit dem Steuersignal ansteuerbar ist, wobei das Signalmuster aus an allen Lichtempfängern empfangenen identischen Lichtintensitätssignalen bestehen kann.

Zur Betätigung eines Schaltelements kann die Handhabe entgegen einer Federkraft zur Beaufschlagung eines Schaltelements axial verschiebbar sein.

Ein Ausführungsbeispiel der Erfindung ist in der Zeichnung dargestellt und wird im Folgenden näher beschrieben. Es zeigen:

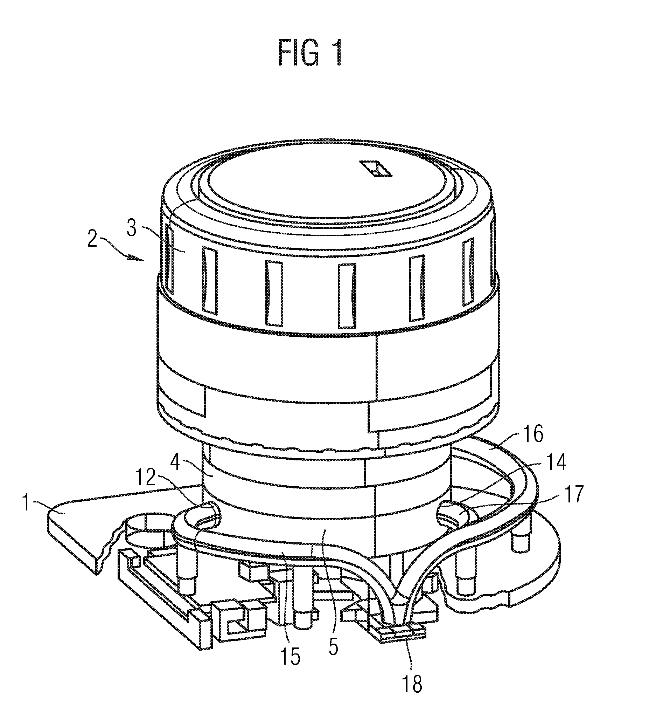

- Figur 1: eine perspektivische Ansicht eines Drehstellers,

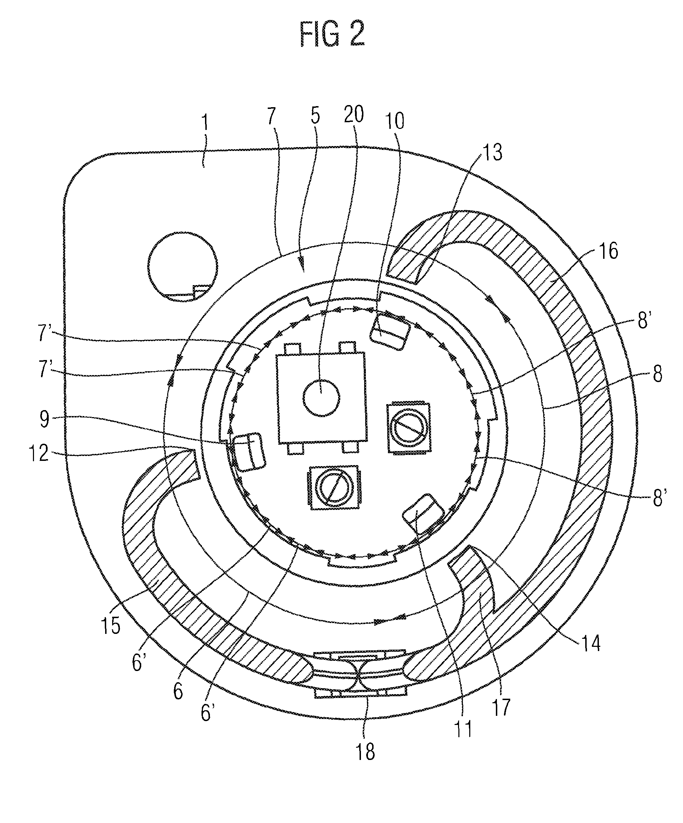

- Figur 2: einen Querschnitt im Bereich der Lichtempfänger des Drehstellers nach Figur 1,

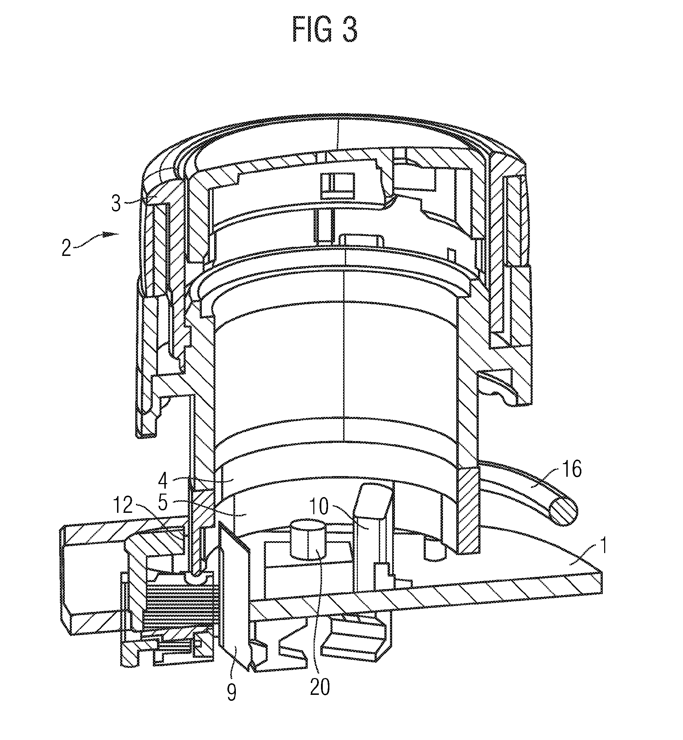

- Figur 3: einen perspektivischen Längsschnitt des Drehstellers nach Figur 1,

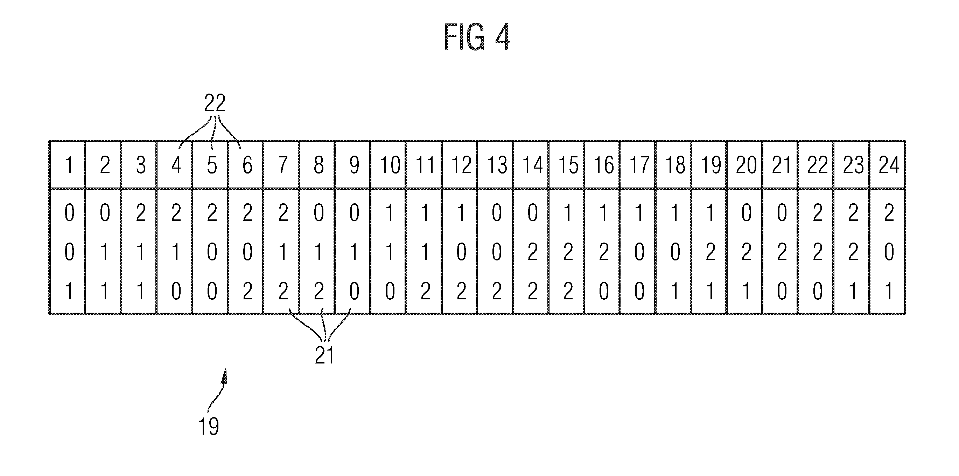

- Figur 4: ein Signalmusterkode des Drehstellers nach Figur 1,
- Figur 5: eine perspektivische Ansicht der Kodierringe des Drehstellers nach Figur 1.

Der dargestellte Drehsteller weist eine Trägerplatte 1 auf, an der eine zylinderartige Handhabe 2 um ihre Längsachse drehbar gelagert ist.

Die Handhabe 2 weist an ihrem der Trägerplatte 1 entfernten Ende ein Knopfteil 3 auf, mittels dessen sie von einer Person um ihre Längsachse in vierundzwanzig Drehschritten gedreht werden kann.

An ihrem der Trägerplatte 1 zugewandten Endbereich weist die Handhabe 2 axial nebeneinander einen ersten Kodierring 4 und einen zweiten Kodierring 5 auf.

Die beiden Kodierringe 4 und 5 bestehen aus einem transparenten Material.

Während der erste Kodierring 4 über seine ganze umlaufende Erstreckung dieselbe radiale Dicke aufweist, besitzt der zweite Kodierring 5 drei unterschiedliche radiale Dicken, so dass drei unterschiedliche radiale Transparenzgrade entstehen.

Der Kodierring 5 weist entlang seines Umfangs drei gleiche Ringbereiche 6, 7 und 8 auf, von denen jeder Ringbereich 6, 7 und 8 wiederum entlang seines Umfangs in acht gleiche Kodierbereiche 6', 7' und 8' unterteilt ist.

Jeder Kodierbereich 6', 7' und 8' entspricht einem Drehschritt der Handhabe 2 von 15°.

Innerhalb des Kodierrings 5 sind auf der Trägerplatte 1 um 120° zueinander versetzt drei radial nach außen gerichtete Lichtquellen 9, 10 und 11 so angeordnet, dass sie sich in einer Drehschrittposition befinden.

Den Lichtquellen 9, 10 und 11 radial gegenüberliegend sind auf der Außenseite des zweiten Kodierrings 5 drei mit ihren Lichteinkoppelstellen 12, 13 und 14 den Lichtquellen 9, 10 und 11 zugewandte Lichtleiter 15, 16 und 17 angeordnet, die ebenfalls an der Trägerplatte 1 befestigt sind und alle zu einem einzigen Photosensor 18 führen.

Die Lichtleiter 15, 16 und 17 bilden ein einziges Bauteil.

Durch die unterschiedlichen Transparenzgrade des zweiten Kodierrings 5 wird die zu den Lichteinkoppelstellen 12 bis 14 gelangende Lichtintensität des von den Lichtquellen 9 bis 11 ausgesandten Lichts auf drei unterschiedliche Lichtintensitäten herabgesetzt.

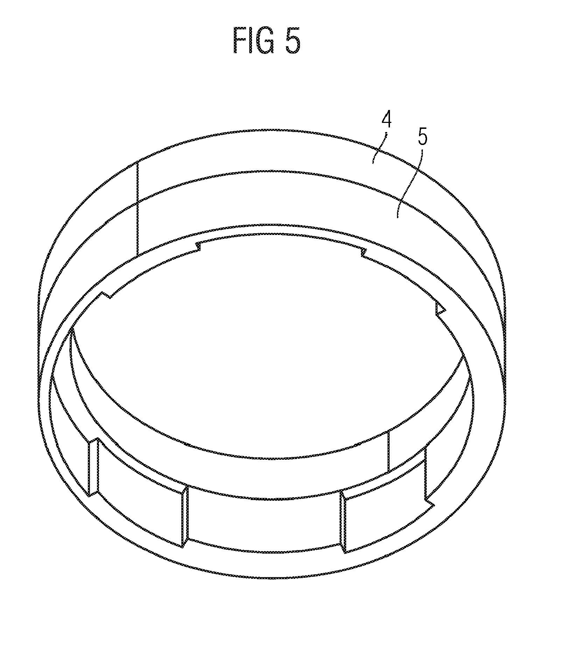

Damit wird für jede Drehschrittposition ein ganz bestimmtes Signalmuster 21 gebildet, wobei die Signalmustertabelle 19 in Figur 5 die Signalmuster 21 der vierundzwanzig Drehschrittpositionen 22 zeigt.

Dabei steht die "0" für eine geringe empfangene Lichtintensität, "1" für eine mittlere empfangene Lichtintensität, und "2" für eine hohe empfangene Lichtintensität.

Bei jeder Weiterdrehung um einen Drehschritt ändert sich die empfangene Lichtintensität nur an einem der drei Lichteinkoppelstellen 12 bis 14.

Damit die Lichtintensität an jeder einzelnen Lichteinkoppelstelle 12 bis 14 separat erfasst werden kann, erfolgt die Ansteuerung der Lichtquellen 9 bis 11 im Multiplexbetrieb, wobei im gleichen Rhythmus der Photosensor 18 die Lichtintensität erfasst und ein entsprechendes Lichtintensitätssignal erzeugt und an eine nicht dargestellte Elektronik weiterleitet.

In einem Speicher der Elektronik ist die Signalmustertabelle 19 abgelegt.

Bei einem Vergleich des empfangenen Signalmusters 21 einer Drehschrittposition 22 des zweiten Kodierrings 5 mit der Signalmustertabelle 19 kann die Drehschrittposition 22 definiert werden.

Wird die Handhabe 2 so axial verschoben, dass der erste Kodierring 4 zwischen die Lichtquelle 9 bis 11 und die Lichteinkoppelstelle 12 bis 14 gelangt, erfassen aufgrund der gleichen Transparenz am gesamten Umfang des ersten Kodierrings 4 alle Lichteinkoppelstellen 12 bis 14 dasselbe Lichtintensitätssignal.

Die Elektronik erkennt, dass dieses Muster nicht einem der Signalmuster 21 der Signalmustertabelle 19 entspricht und erzeugt daher ein besonderes Steuersignal zum Ansteuern eines nicht dargestellten elektrischen Geräts.

Durch ein weiteres axiales Verschieben der Handhabe 2 kann diese ein auf der Trägerplatte 1 angeordnetes Schaltelement 20 beaufschlagen und schalten.

## Patentansprüche

1. Drehsteller mit Drehpositionserkennung, insbesondere für den Einsatz in einem Kraftfahrzeug, mit einer um eine Drehachse drehbaren Handhabe sowie einer Positionssensorik zur Erfassung der Drehposition der Handhabe, **da** - **durch gekennzeichnet**, **dass** von der Handhabe (2) ein ringartiges Kodierelement in Drehschritten um eine Drehachse drehbar ist, das entlang seines radial umlaufenden Umfangs mehrere Ringbereiche (6, 7, 8) aufweist und jeder Ringbereich (6, 7, 8) sich über dieselbe Anzahl an Drehschritten erstreckt, mit jeweils einem Drehschritt zugeordneten Kodierbereich (6', 7', 8'), wobei die Kodierbereiche (6', 7', 8') jeweils eine bestimmte Transparenz oder Reflexionsfläche aufweisen, mit mehreren um den Umfang des Kodierelements verteilt fest angeordneten Lichtquellen (9, 10, 11), denen jeweils fest angeordnete Lichtempfänger zum Empfang des von den Lichtquellen (9, 10, 11) durch die transparenten Kodierbereiche (6', 7', 8') hindurchtretenden Lichts oder des an den Kodierbereichen (6', 7', 8') reflektierten Lichts zugeordnet sind, wobei zu jeder Drehschrittposition die von jedem Lichtempfänger empfangene Lichtintensität separat erfassbar und ein entsprechendes Lichtintensitätssignal einer Elektronik zuführbar ist, in der ein Signalmuster (21) der empfangenen Lichtintensitätssignale der Lichtempfänger gebildet und mit in einem Speicher abgelegten Signalmustern (21) vergleichbar ist, wobei jedes abgelegte Signalmuster (21) einer Drehposition der Handhabe (2) entspricht, und wobei pro Weiterdrehung um einen Drehschritt von einem einzigen Lichtempfänger eine Lichtintensitätsänderung sowie von den weiteren Lichtempfängern keine Lichtintensitätsänderung erfassbar ist.

2. Drehsteller nach Anspruch 1, **dadurch gekennzeichnet, dass** das von den Lichtempfängern empfangene Licht Photosensoren (18) zur Bildung der Lichtintensitätssignale zuleitbar ist.

3. Drehsteller nach Anspruch 2, **dadurch gekennzeichnet, dass** das von mehreren Lichtempfängern erfasste Licht einem einzigen Photosensor (18) zuleitbar ist.

4. Drehsteller nach Anspruch 3, **dadurch gekennzeichnet, dass** das von allen Lichtempfängern erfasste Licht einem einzigen Photosensor (18) zuleitbar ist, wobei die den Lichtempfängern zugeordneten Lichtquellen (9, 10, 11) in einem Multiplexverfahren ansteuerbar sind.

5. Drehsteller nach einem der vorhergehenden Ansprüche, **dadurch gekennzeichnet, dass** die Lichtempfänger Lichteinkoppelstellen (12, 13, 13) von Lichtleitern (15, 16, 17) sind, von denen das erfasste Licht dem oder den Photosensoren (18) zuleitbar ist.

6. Drehsteller nach Anspruch 5, **dadurch gekennzeichnet, dass** die Lichtleiter (15, 16, 17) mehrerer Lichtempfänger, die zu einem einzigen Photosensor (18) führen, einteilig ausgebildet sind.

7. Drehsteller nach einem der vorhergehenden Ansprüche, **dadurch gekennzeichnet, dass** die Anzahl der Drehschritte pro Ringbereich (6, 7, 8) des Kodierelements der Anzahl von Lichtempfängern entspricht.

8. Drehsteller nach einem der vorhergehenden Ansprüche,
**dadurch gekennzeichnet, dass** die Drehschritte durch Rastpositionen der Handhabe (2) definiert sind.

9. Drehsteller nach einem der vorhergehenden Ansprüche, **dadurch gekennzeichnet, dass** bei Weiterdrehung des Kodierelements um einen Drehschritt eine Erfassung der Lichtintensität von einem Kodierbereich (6', 7', 8') zu einem benachbarten Kodierbereich (6', 7', 8') übergangslos erfolgt.

10. Drehsteller nach einem der vorhergehenden Ansprüche, **dadurch gekennzeichnet, dass** das Kodierelement ein Kodierring (5) ist, dessen Kodierbereiche (6', 7', 8') unterschiedlicher Transparenz eine entsprechende unterschiedliche Wanddicke aufweisen.

11. Drehsteller nach einem der vorhergehenden Ansprüche, **dadurch gekennzeichnet, dass** axial neben dem ringartigen Kodierelement (5) ein oder mehrere weitere ringartige Kodierelemente (4) angeordnet sind, wobei jedes der Kodierelemente (4, 5) in die Ebene der Lichtquellen (9, 10, 11) und Lichtempfänger bewegbar ist und wobei jedem der Kodierelemente (5) zugeordnet Signalmuster (21) in dem Speicher abgelegt sind.

12. Drehsteller nach Anspruch 11, **dadurch gekennzeichnet, dass** die mehreren ringartigen Kodierelemente (4, 5) zu einem Kodierringblock fest miteinander verbunden sind, der axial verschiebbar einstellbar ist.

13. Drehsteller nach einem der Ansprüche 11 und 12, **dadurch gekennzeichnet, dass** durch eines der ringartigen Kodierelemente (4) ein Signalmuster eines Steuersignals erzeugbar ist, wobei von der Elektronik ein elektrisches oder elektronisches Gerät mit dem Steuersignal ansteuerbar ist.

14. Drehsteller nach Anspruch 13, **dadurch gekennzeichnet, dass** das Signalmuster aus an allen Lichtempfängern empfangenen identischen Lichtintensitätssignalen besteht.

15. Drehsteller nach einem der vorhergehenden Ansprüche, **dadurch gekennzeichnet, dass** die Handhabe (2) entgegen einer Federkraft zur Beaufschlagung eines Schaltelements (20) axial verschiebbar ist.
